# EUROPEAN PATENT SPECIFICATION

(11) **EP 0 348 031 B1**
(45) Date of publication and mention of the grant of the patent: **14.12.1994**
(21) Application number: 89304659.9
(22) Date of filing: 09.05.1989
(51) Int. Cl.: G06F 3/033

(54) **Display system**
Anzeigesystem
Systéme d'affichage

(30) Priority: 10.06.1988 US 204669
(43) Date of publication of application: 27.12.1989
(73) Proprietor: International Business Machines Corporation, Armonk, N.Y. 10504 (US)
(72) Inventor: Gest, Stephen Brent, Austin Texas 78745 (US); Wymore, Farrell Wade, Austin Texas 78759 (US)
(74) Representative: Bailey, Geoffrey Alan

(56) References cited:
- I.E.E.E. SOFTWARE, vol. 4, no. 4, July 1987, pages 60-72, IEEE, New York, US;G. FISCHER: "Cognitive view of reuse and redesign"
- AT&T TECHNICAL JOURNAL, vol.66, no. 6, November-December 1987, pages 3-14, Short Hills, New York, US; Y.BERNET AND J.M. McCarthy: "The 630 multitasking graphics terminal"

## Description

The invention relates to a tool for a display system, to a display system incorporating such a tool and to methods of displaying information.

Windows, icons, mouse interactions, and pop-up menu systems have been part of computer user interfaces since the early 1970s. For example, Smalltalk, which had its beginnings at Xerox PARC, features multiple window informational windows, pop-up menus indicating action choices, mouse interaction with the display screen and many other aspects of today's modern user interfaces. Smalltalk is further described in "Smalltalk-80, The Language and its implementation" Goldberg, A. and Robson, D., Addison-Wesley Publishing Co., 1985, and Smalltalk-80, The Interactive Programming Environment", Addison Wesley Publishing Co., 1984. In addition to the tools mentioned above, Smalltalk included a scrolling tool which is described, for example on page 302 in the first of the above references and on page 39 in the second one.

The scroll tool in the Smalltalk environment is in the form of a narrow rectangle, termed a scroll bar, along the left edge of a text window. The scroll bar contains a darkened rectangle sometimes referred to as the thumb. The size of the thumb represents the amount of data being displayed in the window relative to the whole buffer of data. The position of the thumb within the scroll bar indicates the relative position of the data in the window to the beginning of the buffer. The user may select the thumb with the mouse and move it up or down inside the scroll bar. This action causes the data to scroll in the window in the indicated direction.

Data may be scrolled as the thumb is moved, referred to as dynamic scrolling. Due to the performance of the display system, a more common form of scrolling is static scrolling in which data is scrolled after the release of the mouse button, or movement of the thumb.

The user may also click the mouse (i.e, depress - theoretically, briefly - and then release a mouse button) in the scroll bar. This interaction causes the data to scroll one full window in the direction indicated by the position of the mouse cursor in the scroll bar.

Other personal computer systems may feature two scroll bars for each window containing data to be displayed: one for scrolling horizontally, and one for scrolling vertically. These scroll bars differ from the previously described scroll bar in that 1) the thumb indicates the relative position only, not the relative size of the displayed data portion, and 2) each scroll bar has two other button indicators which allow scrolling in different increments other than one full window. Usually, this increment is one line at a time, in the vertical direction, and a predetermined increment, such as a half window, in the horizontal direction. The scroll bars for horizontal and vertical scrolling are positioned perpendicularly along a side and bottom window edges. Scrolling horizontally and vertically are done independently. Therefore, scrolling diagonally can only be accomplished by multiple mouse interactions with the two scroll bars.

Since the introduction of these two scrolling systems, numerous types of scroll bars have been introduced; many with slightly differing semantics. For example, some scroll bars take different actions if the user clicks above or below the thumb while others have no thumb at all. Some systems do not allow horizontal scrolling. Other systems allow diagonal scrolling via the interaction with horizontal and vertical scroll bars.

Some essential characteristics of these scrolling tools include the following:
1) scrolling is accomplished via mouse interactions in the scroll bar, usually by manipulating the thumb;
2) the scroll bar thumb may indicate the size and position of the data being displayed relative to the whole buffer;
3) horizontal scrolling, if done at all, is done by manipulating a separate horizontal scroll bar;
4) diagonal scrolling is accomplished via multiple interactions with the mouse and the horizontal and vertical scroll bars;
5) the scroll bars can scroll data in at most two increments with one click of a mouse button; and
6) the scroll bars are placed along the edges of the window, and thus take up extra space on the display portion of the screen.

These characteristics of scrolling tools known in the art contain a series of flaws which inhibit smooth interaction and effectiveness for the user. For example, where scrolling in two dimensions is required, multiple tools are provided for separately scrolling vertically and horizontally. These tools not only require additional interaction from the user to scroll in a variety of directions, but take up additional screen real estate.

An object of the invention, therefore, is to provide a tool which enables the size and location of a displayed portion of a document to be represented which avoids the problems of the prior art.

In accordance with a first aspect of the present invention, therefore, there is provided a tool for a display system as defined in claim 1.

By superimposing a box on the display means, the size and position of the visible portion of a document with respect to a whole document can be illustrated without wasting space for scroll bars. The display means could take the form of a window on a display screen or the like. Alternatively, the display means could form the whole of the display screen. Either way, the use of a box allows the two-dimensional extent of the visible portion of the document to be represented in a much more readily appreciated manner than is possible with horizontal and vertical scroll bars.

Preferably, the box is dimensioned relative to said display means to be representative of the amount of said document visible within said display means. This enables the relationship of the visible portion of the document to the whole document to be graphically illustrated. In order to determine the size of the box to be displayed, therefore, said means for superimposing a box preferably comprises sizing means for determining the relative sizes of said window and said document and for generating a representation of a two dimensional area of a particular size in dependence on said determination.

In order to enable easy interaction with said box, the sizing means will generate a two dimensional area having dimensions of at least a predetermined size. In such a special case therefore, (eg. when the visible portion is very small) the size of the box with respect to that of the display means (eg. a window) will not be proportional to the ratio of the size of the visible portion to that of the whole document.

For superimposing the box on the visible portion of the document, said means for superimposing a box preferably comprises means for logically combining said representation of a two dimensional area with said visible portion of the document at a location in said window representative of the location of said visible portion with respect to said whole document. In a particular embodiment to be described later, the logical combination function used is an exclusive-OR function. This is a way of superimposing the box on the data from the document without obscuring that data.

It is deemed desirable to seek to provide the tool in such a way that it facilitates the scrolling of a document in said display means.

A box as described above can be used for scrolling a document by the provision of means for interacting with said box to scroll said document within said window.

In a preferred embodiment, said means for interacting with said box operates in two different modes.

To enable operation in the first mode, said means for interacting with said box comprises user-operable cursor positioning means for causing movement of a cursor, a user-operable dynamic scroll selector, and dynamic scroll logic for responding to an operation of the cursor positioning means indicating movement of said cursor in a selected direction when said dynamic scroll selector has been activated to cause scrolling of the document with respect to said window in a direction opposite to that indicated by said operation of said cursor positioning means. This is equivalent to designating the box as an oversized cursor and moving said box in the direction indicated by said operation of said cursor positioning means.

For operation in the second mode, said means for interacting with said box comprises user-operable cursor positioning means for causing movement of a cursor, a user-operable preset scroll selector and preset scroll logic for causing scrolling of the document by a preset amount in a selectable direction in response to the position of the cursor with respect to said display and a tool as defined above.

In accordance with a second aspect of the present invention there is provided a method of representing a portion of a document as defined in claim 18.

There is also provided a method of scrolling a document with respect to a display means as defined in claim 19.

Embodiments of the invention are disclosed hereinafter which present to the user a visual representation of the size and position of information displayed to a user relative to the total size of the information stored in a buffer, without using additional display screen real estate. Some enable horizontal, vertical, and diagonal scrolling in a variety of increments in a smooth and effective manner with a minimum amount of user interaction.

There is also provided a display system comprising a display for use with a processing system, means for displaying information either on the total screen display, or on a portion of the screen such as in a window of the screen display, and a scrolling tool as disclosed above, and defined in claim 17.

The scrolling tools disclosed can provide a combination of operations allowing the user to either scroll vertically, horizontally, or diagonally, in multiple increments with an economy of interaction, while giving a visual representation of the data size and position being displayed relative to the size of the buffer of data. These features are uniquely packaged in a single tool that saves screen real estate by appearing within the target window XORed onto the displayed data. In this way, no data in the target window is obscured.

The size of the scroll box in relation to the size of the information displayed to a user is proportional to the size of the information displayed to a user in relation to the total size of the information stored in the buffer. In addition, the location of the scroll box superimposed on the information displayed to a user is representative of the relative position that the displayed information has to the beginning of the buffer storing the information. Therefore, the size and position of the scroll box superimposed on the displayed information is representative of the size and position of the displayed information visible to a user with respect to the information as a whole.

If a window is used to display the data, the size and location of the scroll box within the window would be proportional to the size and position that the window of information is relative to the whole buffer of information. If the total display screen is used to display the data, the size and location of the scroll box within the display screen would be proportional to the size and location that the information displayed has to the whole buffer of information.

In either case, by superimposing the scroll box within the displayed information, the size and position of the visible portion of buffered data with respect to the whole buffer can be graphically illustrated without using additional screen space for scroll bars. This aspect of the scroll box allows a two-dimensional representation of the visible portion of the buffer to be represented in a much more readily appreciated manner than is possible with separate horizontal and vertical scroll bars.

In order to determine the size of the box to be displayed, the scrolling tool comprises sizing means for determining the relative sizes of the displayed information and the entire buffer of information, and means for generating a representation of a two dimensional area of a particular size in dependence on said determination.

In order to enable easy user interaction with the superimposed scroll box, the sizing means will generate a two dimensional area having dimensions of at least a predetermined size. In a special case when the visible displayed portion of a buffer is very small with respect to the buffer of data as a whole, the size of the scroll box with respect to the size of the displayed information (i.e., either the size of a window, or the size of the screen display as a whole), will not be proportional to the ratio of the size of the visible portion to that of the whole buffer. Instead, in this special case, the size of this scroll box will have this predetermined minimal size.

In order to determine the position of the scroll box within the window of displayed information, the positioning means positions the top of the scroll box from the top of the window of displayed information in the same ratio as the first item displayed is relatively positioned with respect to the buffer of information as a whole.

For superimposing the box on the displayed portion of the buffer of data, the means for superimposing the box preferably comprises means for logically combining the representation of a two dimensional area, i.e., the boundaries of the box, with the displayed portion of the buffer of data at a location in the displayed portion representative of the location of the displayed portion with respect to the buffer as a whole. In a particular embodiment to be described later, the logical combination function used is an exclusive-OR function. This is a way of superimposing the box on the data from the buffer without obscuring that data.

A box as described above can be used for scrolling a buffer of data by interacting with the box to scroll a buffer of data within a displayed area on a screen.

The means for interacting with the box comprises 1) a user-operable cursor positioning means for causing movement of a cursor, such as a mouse input device or cursor positioning keys on a keyboard, 2) a user-operable dynamic scroll selector, such as one or more buttons on a mouse or input keys on a keyboard, and 3) scroll logic.

The scroll logic responds to an operation of the cursor positioning means indicating movement of the cursor in a selected direction when the dynamic scroll selector has been activated to cause scrolling of the data buffer with respect to a window displaying the information. The data buffer is scrolled in a direction opposite to that indicated by the operation of the cursor positioning means. The amount of scrolling is proportional to the amount of cursor movement. The scroll box is dynamically repositioned with respect to the amount of the cursor movement. The resulting position of the box within the window indicates the new relative position of the data being displayed relative to the whole buffer.

Another means for interacting with the box comprises 1) user-operable cursor positioning means for causing movement of a cursor, 2) a user-operable preset scroll selector, which may include but is not limited to a different use of a button on the mouse or different keys on the keyboard, and 3) scroll logic for preset scrolling. The scroll logic causes scrolling of the data buffer by a preset amount in a selectable direction in response to the position of the cursor with respect to the box, and in response to the operation of the preset scroll selector, e.g. clicking a mouse a button.

Preferably, scrolling in a selected direction, in response to the operation of the preset scroll selector, is by a first or a second preset amount dependent upon whether the cursor is inside or outside the box on operation of the preset scroll selector.

Preferably, as an aid to the user, the scroll box tool is logically divided into several regions. The direction in which scrolling will occur, upon operation of the preset scroll selector, will depend upon which logical region the cursor is positioned within.

Preferably, the means for dynamically superimposing a box alters the position of the box within the displayed portion of the data buffer in accordance with the scrolling of the data buffer whereby the box dynamically indicates the portion of the data currently visible in relation to the buffer as a whole.

Within the above, there is disclosed a method of displaying a portion of a buffer of data on a screen display, superimposing a two dimensional object such as an outline of a box on the portion of the buffered data visible on the display, and sizing and locating the box within the displayed portion of the buffered data in relation to the size and location of the displayed portion with respect to the buffer as a whole. This involves interacting with the superimposed box to scroll the buffer within the displayable screen, and dynamically relocating the box within the displayable data to illustrate to the user the current relationship between the displayed scrolled buffer of data and the buffer as a whole.

The present invention will be described further by way of example with reference to embodiments thereof as illustrated in the accompanying drawings, in which:
Figure 1A is a schematic illustration of a display showing a window;
Figure 1B is an example of the contents of a buffer of data, both text and graphics, used to illustrate operations performed herein;
Figure 1C illustrates the size and position of a tool to represent the relative size and position of displayed data to the buffer of data as a whole;
Figures 2A to 2D illustrate the scrolling of a buffer of data within the window;
Figure 3 is a schematic block diagram of part of the tool logic;
Figures 4A to 4C form a schematic block diagram of further parts of the tool logic;
Figure 5A illustrates the hardware, including a display, of a processing system for used;
Figure 5B illustrates the logical structure of the processing system; and
Figure 5C illustrates the physical structure of the processing system.

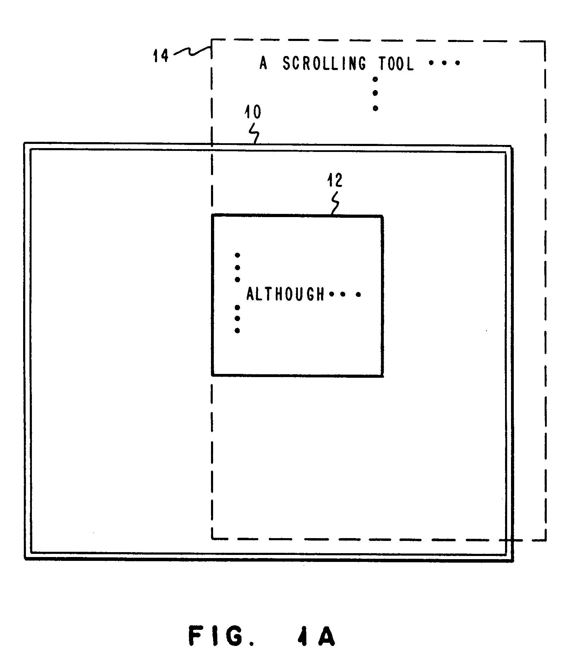

By way of introduction, Figure 1A represents a typical screen 10 of data in a display system which supports a window 12. Within the window 12, data relating to an associated task is displayed. Typically, the data for display in a window comprises data which is stored in a buffer 14 for the associated task. For example, the contents of this patent application, including the drawings, could be stored in a buffer 14, Figure 1B, as text and graphics. More often than not, the size of the buffer is larger than the amount of data that can be displayed within a window 12. The window 12 may be the same size as the display field of the display screen 10, but typically will cover only a part of the screen as the case, for example, with the window 12 in Figure 1A.

Therefore, a scrolling tool is provided that allows the user to browse the buffer within the constraints imposed by the size of the target window 12. As the user graphically manipulates the scroll box via the mouse, the contents of the window 12 change, reacting to the manipulation, to display a different portion of the buffer 14.

The operation of a tool in accordance with the invention will now be described with reference to Figures 1C, 2A to 2D, and Figures 3 and 4A to 4C in terms of a scroll tool for a display system for the display of data in a display system which supports windows. It should however be noted that the invention is neither limited to the display or scrolling of data, nor is it limited in its application to display systems which support windows.

Figure 1C corresponds generally to Figure 1A, except that a two dimensional box 16 is superimposed on the data 4 displayed in the window 12. This box 16 is representative of the size and location of the displayed portion 4 of the buffer of data 14 to the whole buffer 14. The box tool 16 is invoked whenever the user interacts with the mouse and the cursor 18 is within the window 12, or the cursor is moved into the window. The control of the cursor movement is preferably made using a mouse in a conventional manner (although other form of cursor control such as keyboard buttons or a joy stick can be used). The tool 16 can also be invoked by other means known in the art for selecting actions.

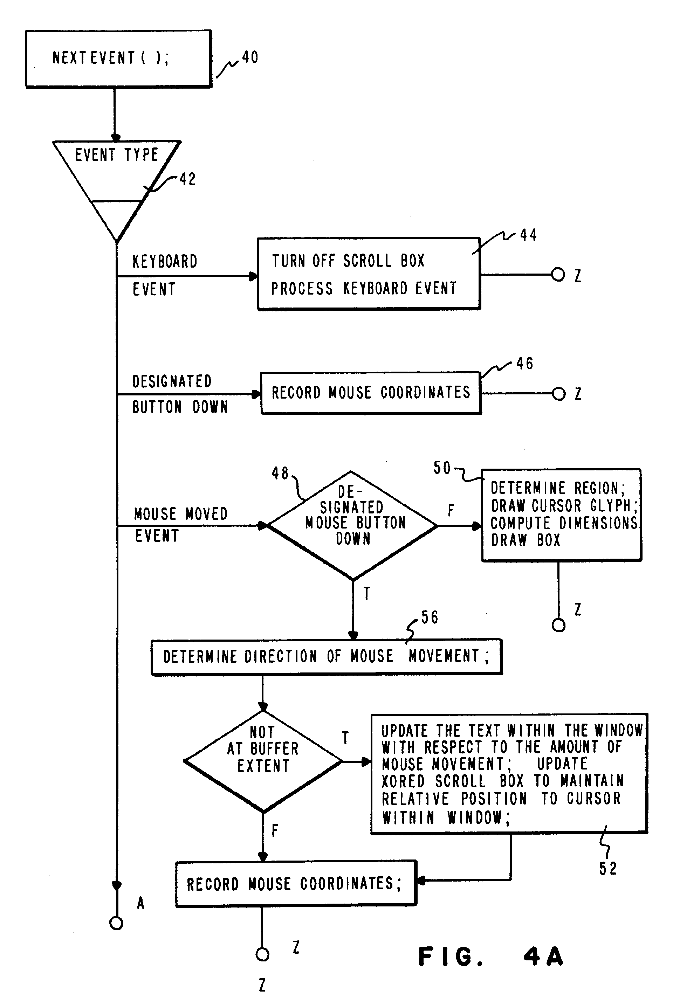

Upon invoking the box, box generation logic as illustrated in Figure 3 determines the size of the box to be displayed, step 24, Figure 3. This can be done in the most simple manner by first determining the number of rows 3A for the buffer 14, Figure 1C, and the maximum number of characters in a row 3B of a data buffer 14, and also determining the height 2A and width 2B of the displayed portion of the buffered data 4. These determinations can be made in any appropriate manner by accessing system variables and/or computing the values from the primary data. From these values the ratios of the horizontal 2B and the vertical 2A dimensions of the visible portion of the buffered data 4 to the corresponding dimensions 3B, 3A of the buffer 14 can be established. The horizontal 1B and vertical 1A dimensions of a box 16 to represent the size of the displayed data portion 4 relative to the buffer of data as a whole 14 can then be determined by using these ratios with respect to the dimensions of the window 12 and the buffer as a whole 14. In other words, the ratio of the horizontal dimension 1B of the box 16 to the horizontal dimension of the window 2B would equal the ratio of the horizontal dimension 2B of the window 12 to the horizontal dimension 3B of the buffer 14 as a whole. As shown in Figure 1C, the ratio of 1B:2B would equal the ratio of 2B:3B. Likewise the vertical dimension 1A of the box 16 is determined from the size of the vertical dimension 2A of the displayed portion of data 4 and the vertical dimension 3A of the buffer 14 as a whole.

In order to facilitate interaction with the box 16, it is desirable for it to have dimensions of at least a predetermined minimum value. For this reason, if the dimensions of the box 16 are too small, step 26, Figure 3, the dimension concerned is set to this minimum value, step 28, Figure 3. Although the size of the box is still representative of the size of the displayed portion, it is not exactly proportional thereto. As well as the size of the box, the box generating logic determines the position within the window 12 at which the box 16 should be displayed in order to represent the portion from the buffer which is visible, step 30, Figure 3.

Once these values have been determined, a representation of an area 16 of the appropriate size is logically combined with the data 4 at the appropriate location within the window, step 32, Figure 3. As shown in Figure 3, the logical combination is achieved with an exclusive OR function. In this way, the window's data is still readable even though the box has been superimposed thereon. Other logical combinations could, however, be performed as appropriate.

By positioning the box 16 relative to the containing window 12 in this way, the user can be given a visual representation of the portion of data 4 being displayed within the window 12 relative to the buffer 14. By sizing the box 16 relative to the window 12, the user can also be given a visual representation of how much of the buffer 14 is being displayed within the window 12 relative to the size of the whole buffer 14.

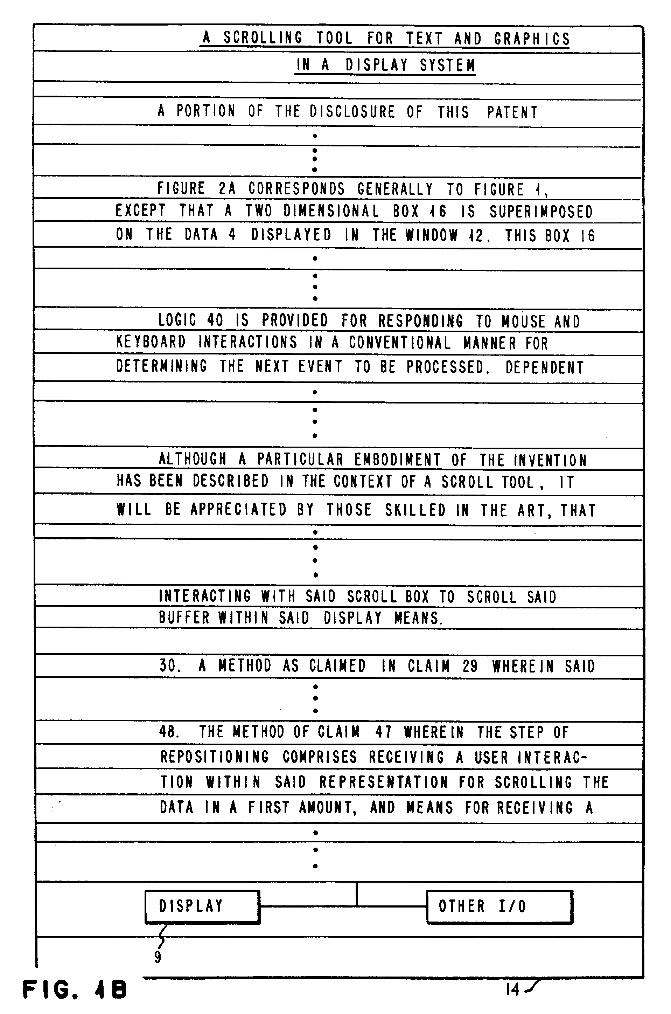

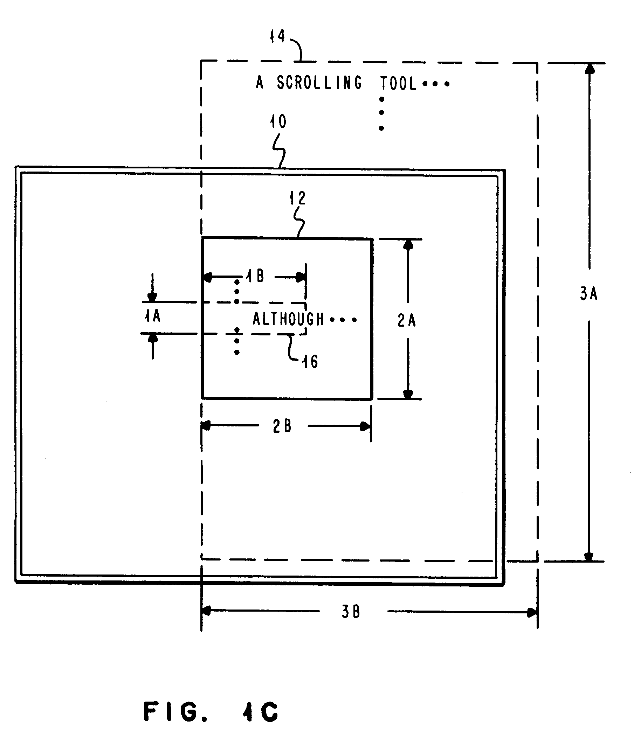

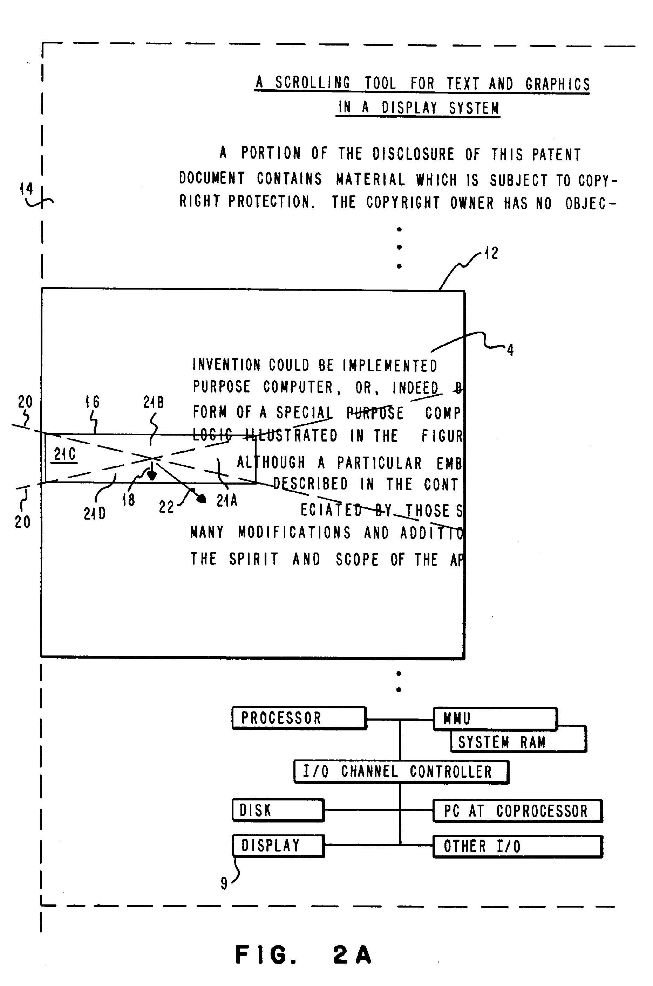

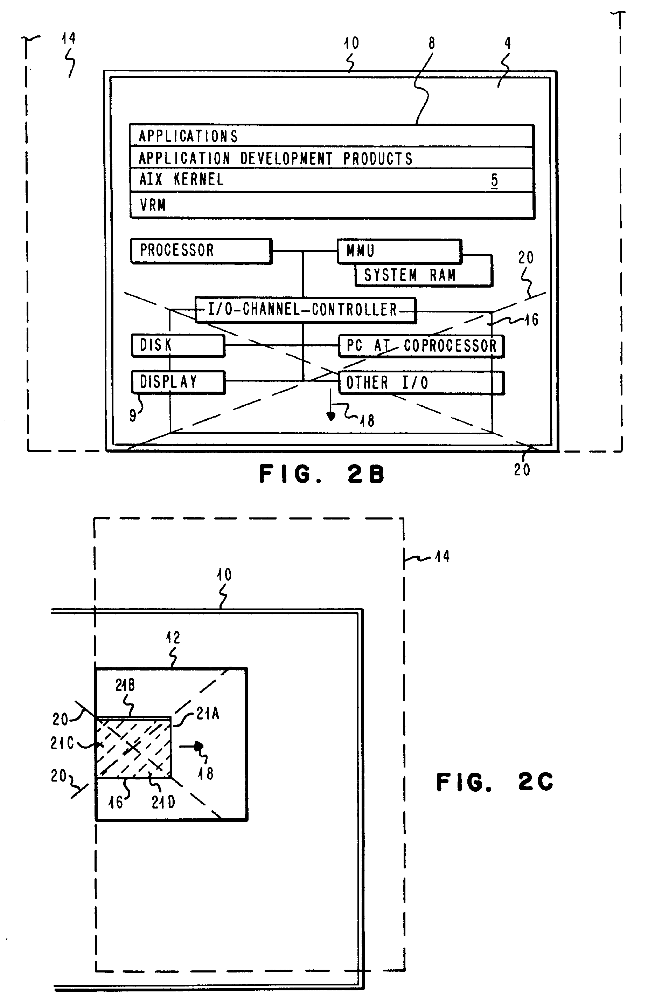

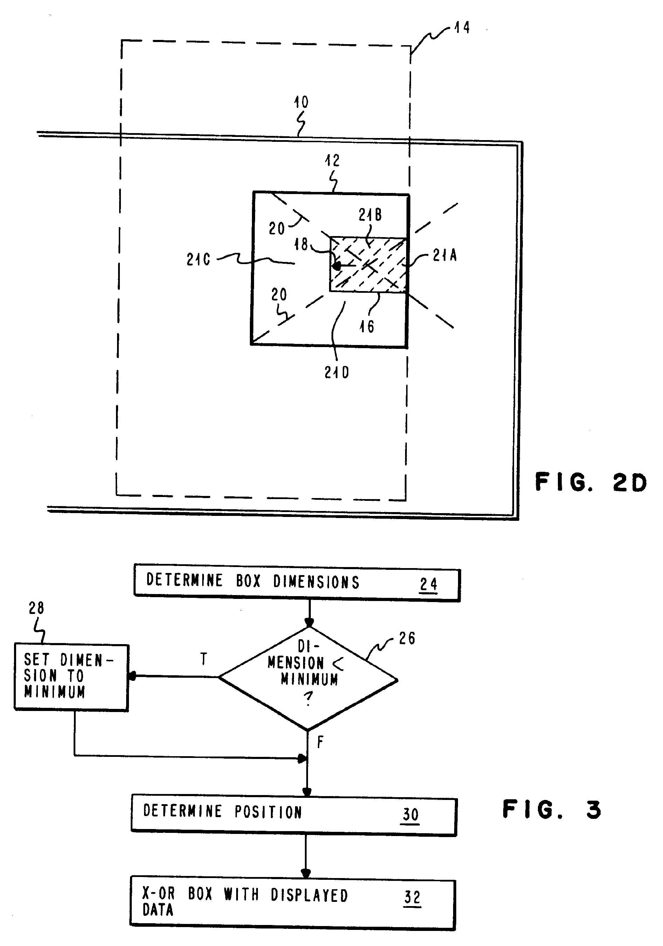

In Figure 2A, and also in Figures 2B to 2D, diagonal lines 20 are shown. These are not actually displayed on the screen, but are shown in the drawing to illustrate the division of space around the centre of the box 16 into a number of regions, 21A to 21D, Figure 2A. It should be understood, however, that a number of regions other than four may be chosen if desired. Also, the mouse cursor is caused to change shape as it moves within the window in order to indicate the direction of scrolling that will occur if the designated button is clicked. It can be seen in Figures 2A and 2B that the cursor arrow 18 points down, in Figure 2C it points to the right and in Figure 2D it points to the left. Logic is provided for determining in which of these regions the cursor 18 is to be found and for displaying a cursor symbol having a form which is dependent upon the region 21A to 21D in which it is to be found. The cursor symbol for each region is preferably an arrow or the like which indicates a direction. This is used for indicating a direction of scrolling during a preset scrolling operation as will be explained later.

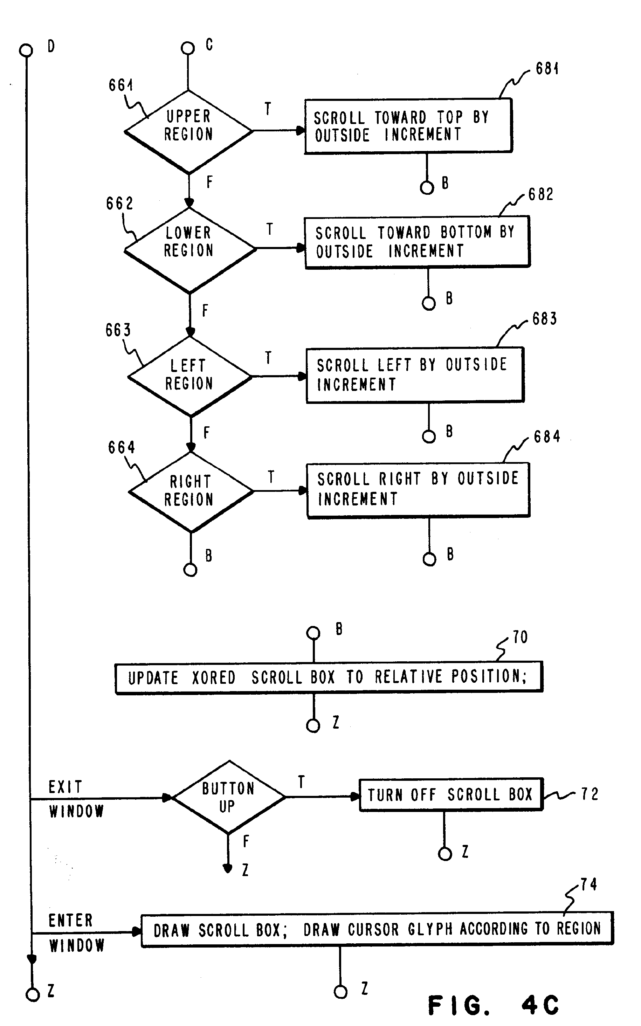

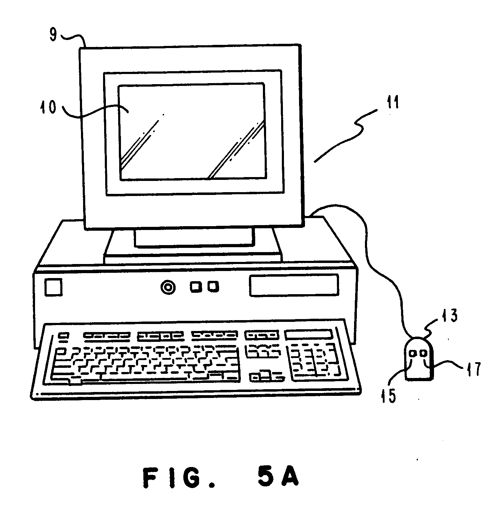

Figures 2A to 2D and 4A to 4C illustrate how the box 16 can be used as part of a scroll tool for scrolling a buffer of data 14 with respect to a window 12 in an efficient and user friendly manner. Two basic types of scrolling operations are described using a mouse. The first type of scrolling uses a "point and drag" technique to activate the dynamic scroll selector in which a designated button is held down and the mouse is moved to move the cursor. This is illustrated in Figures 2A and 2B and comprises pressing a designated mouse button, moving the mouse in a desired direction and then releasing the button.

The second type is "clicking" referred to as "preset scrolling". Preset scrolling is illustrated in Figures 2C and 2D and comprises the steps of simply depressing and releasing the designated mouse button without moving the mouse. The direction of scrolling in this case is determined by the position of the cursor 18 with respect to the regions 21A to 21D mentioned above, and is indicated by the direction of the arrow-like cursor at the time of clicking the designated button. The amount of scrolling in this case is determined by whether the cursor is inside or outside the box 16 at the time of clicking.

Figures 4a to 4C represent the control logic for controlling the scrolling operations when the box 16 is displayed in the window 12. In the context of this example of the use of the box 16, the box is termed a scroll box.

Logic 40 is provided for responding to mouse and keyboard interactions in a conventional manner for determining the next event to be processed. Dependent upon the event type when an event happens, a number of actions will occur as set out in Figures 4A to 4C.

If there is a keyboard event, the scroll box is turned off and the keyboard event is processed in step 44.

If the designated button is down, the mouse coordinates are stored in step 46.

If the event is the moving of the mouse, a test is made in step 48 to determined whether the designated button is down. If the designated button is not down, then the new position of the cursor 18 is determined with respect to the aforementioned regions and the appropriate cursor symbol is drawn in step 50. The dimensions of the box 16 are computed, and the box is superimposed on the displayed data 4, also step 50.

If the designated mouse button is down, this means that the logic recognises, at step 56, that point and drag scrolling is in progress. In Figure 2A the direction of mouse movement for a dynamic scrolling operation is represented by the arrow 22 which is intended to illustrate the direction of cursor movement which would have occurred if the designated button had been pressed. The effect of pressing the designated mouse button and moving the mouse is to dynamically move the scroll box 16 with the cursor in the indicated direction, and to scroll the data, either dynamically or statically, past the window in the opposite direction.

Figure 2B illustrates the state of the display 10 following a dynamic scroll operation from Figure 2A. It can be seen that the position of the scroll box 16 on the display means 10 has moved to reflect the relative change in position between the portion 4 of the buffer of data which is visible, to the buffer 14 as a whole.

The amount of scrolling is determined by the distance of the mouse movement. In other words, the greater the amount of mouse movement, the greater the amount of scrolling. For example, pressing the designated mouse button within the scroll box, and moving the mouse towards the bottom of the window will scroll the data within the window towards the end of the data buffer. By extending the mouse movement, the user extends the amount of data scrolled, from line by line all the way to a repositioning at the end of the buffer of data. For each incremental mouse movement, the scroll box 16 is repositioned within the target window 12 indicating the new relative position in the data buffer 14, step 52. As is illustrated in Figures 2A and 2B, scrolling can be achieved in a diagonal as well as horizontal and vertical directions. The limit on the direction of scrolling possible is basically determined by the angular resolution of mouse movement.

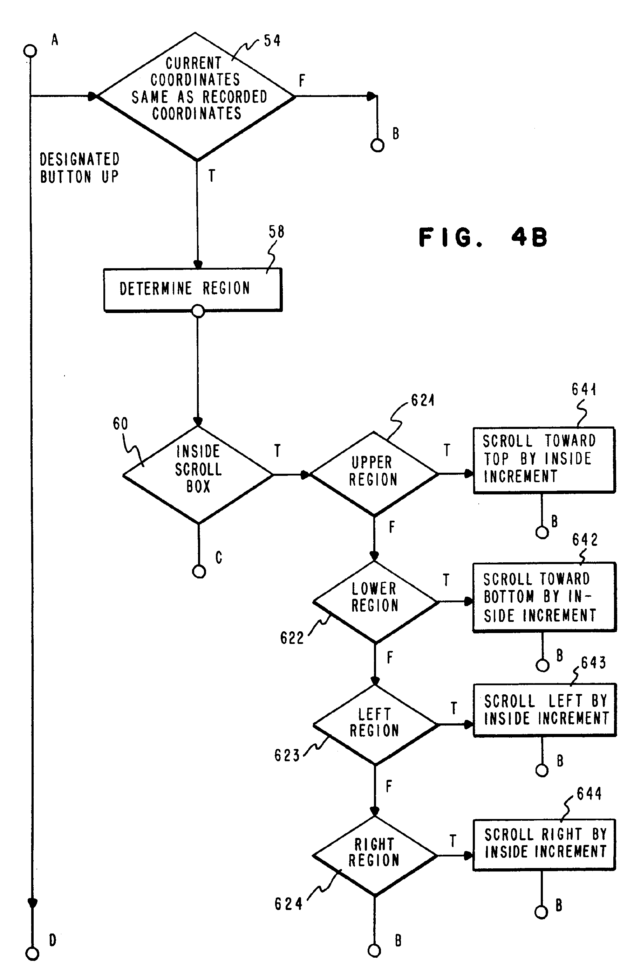

If the designated button is released then a test is made at step 54, Fig. 4B, to see whether the mouse position coordinates have changed while the button was down, or pressed. If the mouse position has not changed, the logic knows that a preset scrolling operation is required. The logic at step 58 determines the region in which the cursor is to be found in order to determine the preset scrolling operation to be performed. The actual tests performed are expanded as shown in Fig. 4B and 4C.

If the cursor is within the box 16 (step 60), then this means that a scrolling operation by a first increment is needed. Dependent upon one of the four regions 21A to 21D inside the box in which the cursor 18 is to be found (steps 621, 622, 623, 624), scrolling takes place by a first increment in an appropriate direction (steps 641, 642, 643, 644).

If the cursor is outside the box 16, then this means that a scrolling operation by a second increment is needed. Dependent upon one of the four regions 21A to 21D outside the box 16 in which the cursor 18 is to be found (steps 661, 662, 663, 664), scrolling takes place by a second increment in an appropriate direction (steps 681, 682, 683, 684).

For example, clicking the mouse inside the scroll box 16 can be arranged to cause the data to scroll one line vertically or one character horizontally as appropriate. Clicking the mouse outside the scroll box 16 can be arranged to cause the data to scroll a different increment, one window full either horizontally or vertically, for example. The direction of the scroll is determined by the position of the mouse cursor when the click occurred. Thus, for example, if the user clicks inside the scroll box 16 in the upper region 21B, the data will scroll one line toward the beginning of the data buffer 14. If the user clicks outside the scroll box 16 in the lower region 21D, the data will scroll one page toward the end of the data buffer 14. If the user clicks outside the scroll box 16 in the right region 21A, as illustrated in Figure 2C, the data will scroll one full window to the right as illustrated in Figure 2D. At the end of a preset scrolling operation the scroll box position is updated at step 70.

If the cursor exits the window with no buttons depressed, the scroll box is turned off at step 72. Other ways of turning off the scroll box may include a keyboard input, another button other than the designated mouse button, and other ways known in the art to de-select an action.

If the cursor enters the window, the scroll box is superimposed on the displayed data, and the cursor glyph is oriented according to the region in which it is located, step 74.

In the following, programming design language code is presented as an alternative representation of the logic shown in Figures 4A to 4C. This code illustrates the actions to be taken when certain events occur. Many events that might occur are not relevant to processing the scroll box and are ignored. Events are obtained by some external procedure, NextEvent, which returns an event record containing the event type, the button dispositions, and the mouse coordinates.

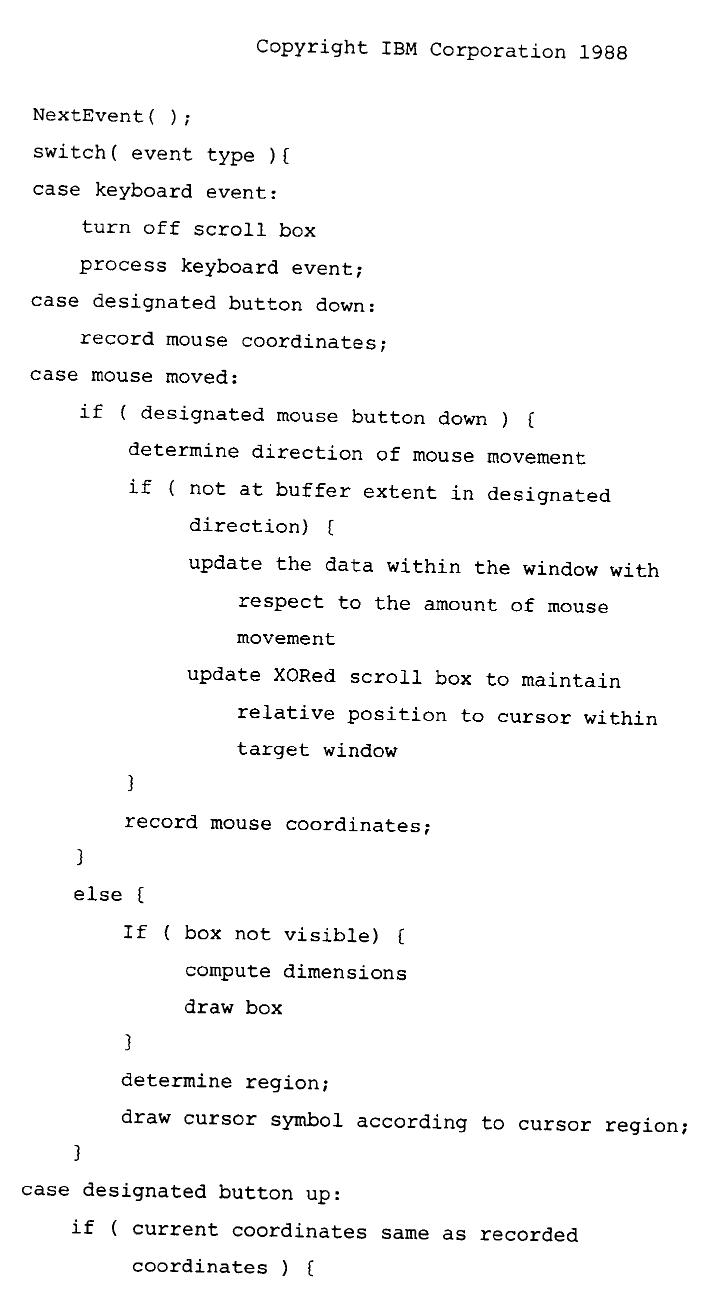

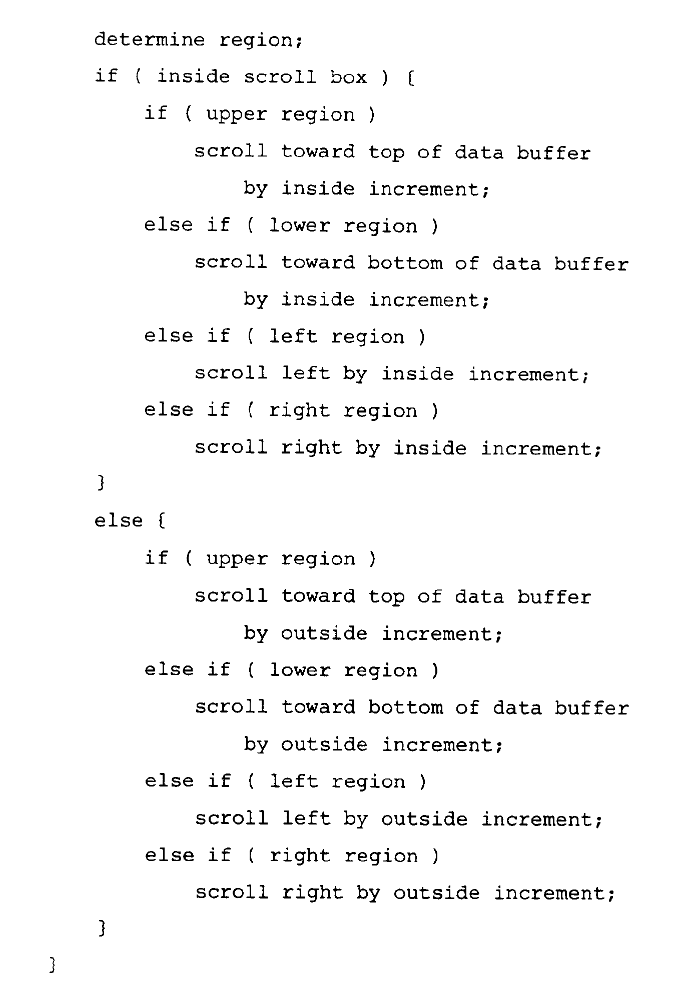

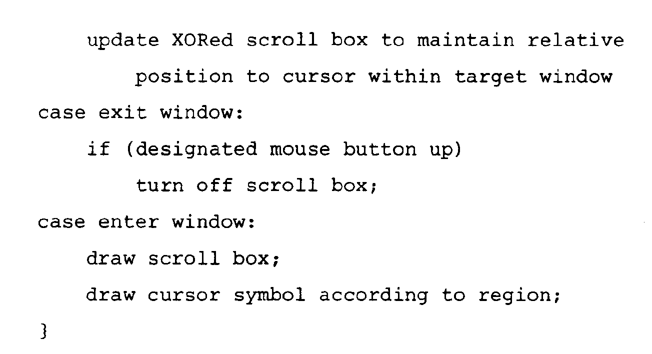

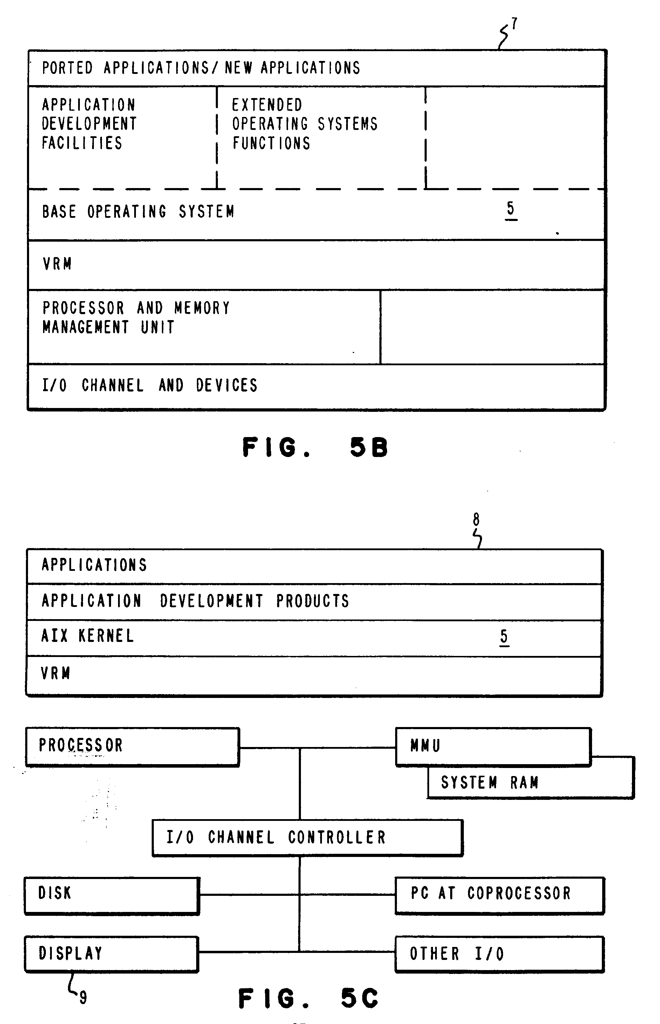

The described embodiments of the invention are implemented by suitably programming an IBM RT PC computer system 2, Figures 5A, 5B, 5C running the AIX operating system 5. The display means referred to could be a window on the screen of the display 9 of the computer system 11 shown in Figure 5A. The designated button referred to in the above description could be either one of the buttons 15, 17 on the mouse 13, also shown in Figure 5A. Figure 5B shows the logical structure 7 of the computer system 11. Figure 5C is a schematic representation of the physical structure of the computer system 11.

For more information on the RT PC, and the AIX operating system, reference can be made to: Bach, M.J., The Design of the UNIX Operating System, Prentice Hall, 1986. Lang, T.G. and Mothersole, T.L., Design of the RTPC VRM Nucleus, September 1, 1986. AIX Operating System Commands Reference, IBM Corporation, SC23-0790. AIX Operating System Managing the AIX Operating System, IBM Corporation, SC23-0793. AIX Operating System Programming Tools and Interfaces, IBM Corporation, SC23-0789. AIX Operating System Technical Reference, Volumes 1 and 2, IBM Corporation, SC23-0808 and SC23-0809. IBM RT Personal Computer Technology, IBM Corporation, SA23-1057, 1986. Virtual Resource Manager Technical Reference, Volumes 1 and 2, IBM Corporation, SC23-0816 and SC23-0817.

The use of a scroll box as described above presents a unique combination of operations allowing the user to scroll either vertically or horizontally in multiple increments with an economy of interaction, while giving visual feedback as to the amount of data being displayed relative to the size of the data buffer. These features are uniquely packaged in a single tool that saves screen real estate by appearing within the target window XORed onto the displayed data.

The embodiment described above provided scrolling. However, other embodiments could have been described. For example, the box can simply be used for representing the part of a buffer of data that is visible in a display window and may not be used for scrolling.

Further, although the display means in which the buffer of data is displayed will typically be rectangular, this need not be the case. For example, the window may be circular. In addition, the buffer of data need not be a text document, but could be in the form of graphical or video data. The data could, for example, represent a map. The document could also be in the form of a mixed media document, in for example, a desk-top publishing application where the document forms a page of a newspaper.

The logic illustrated in the diagrams is implemented by suitably coding the personal computer system illustrated in Figures 5A to 5C. However, it will be appreciated that the invention could be implemented on another general purpose computer, or, indeed be implemented in the form of a special purpose computer by hard wiring the logic illustrated in the Figures.

## Claims

1. A tool for a display system having means for displaying a visible portion of a document, said tool comprising means for superimposing a box on a part of said visible portion, the size and location of said box on said visible portion being representative of the size and location of said visible portion with respect to the whole of said document.

2. A tool as claimed in claim 1 wherein said display means is a display window on a display screen.

3. A tool as claimed in claim 1 or claim 2 wherein said box is dimensioned relative to said display means to be representative of the amount of said document visible within said display means.

4. A tool as claimed in claim 3 wherein said means for superimposing a box comprises sizing means for determining the relative sizes of said display means and said document and for generating a representation of a two dimensional area of a particular size in dependence on said determination.

5. A tool as claimed in claim 4 wherein said two dimensional area generated by said sizing means has dimensions of at least a predetermined size.

6. A tool as claimed in claim 5 wherein said means for superimposing a box comprises means for logically combining said representation of a two dimensional area with said visible portion of said document at a location in said display means representative of the location of said visible portion with respect to said whole document.

7. A tool as claimed in claim 6 wherein said means for logically combining forms the exclusive-OR of said representation of said two dimensional box with said visible portion of said document.

8. A tool as claimed in any one of the preceding claims additionally comprising means for interacting with said box to scroll said document within said window.

9. A tool as claimed in claim 8 wherein said means for interacting with said box comprises user-operable cursor positioning means for causing movement of a cursor, a user-operable dynamic scroll selector, and dynamic scroll logic for responding to an operation of said cursor positioning means indicating movement of said cursor in a selected direction when said dynamic scroll selector has been activated to cause scrolling of the document with respect to said window in a direction opposite to that indicated by said operation of said cursor positioning means.

10. A tool as claimed in claim 9 wherein said user-operable cursor positioning means is a mouse and said dynamic scroll selector is a mouse button.

11. A tool as claimed in claim 8 or claim 9 wherein said means for interacting with said box comprises a user-operable preset scroll selector and preset scroll logic for causing scrolling of the document by a preset amount in a selectable direction in response to the position of the cursor with respect to said box on operation of said preset scroll selector.

12. A tool as claimed in any one of claims 1 to 5 wherein said means for interacting with said box comprises user-operable cursor positioning means for causing movement of a cursor, a user-operable preset scroll selector and preset scroll logic for causing scrolling of the document by a preset amount in a selectable direction in response to the position of the cursor with respect to said box on operation of said preset scroll selector.

13. A tool as claimed in claim 11 or claim 12 wherein scrolling in a selected direction on operation of said preset scroll selector is by a first or a second preset amount dependent upon whether the cursor is inside or outside the box on operation of said preset scroll selector.

14. A tool as claimed in any one of claims 11, 12 or 13 comprising means for logically dividing the display means into a plurality of regions defined with respect to said box and for displaying a cursor which indicates, in each of said regions, the direction in which scrolling will occur on operation of said preset scroll selector.

15. A tool as claimed in any one of claims 11, 12, 13 or 14 wherein said user-operable preset scroll selector is a mouse button.

16. A tool as claimed in any one of claims 8 to 15 wherein said means for superimposing a box dynamically alters the position of said box within the window in accordance with the scrolling of said document whereby the box dynamically indicates the portion of the document currently visible.

17. A display system comprising a display, means for supporting windows on said display and a tool as claimed in any one of the preceding claims.

18. In a display system having means for displaying a visible portion of a document, a method of representing said visible portion comprising the step of superimposing a box on a part of said visible portion, the size and location of said box on said visible portion being representative of the size and location of said visible portion with respect to the whole of said document.

19. A method of scrolling a document with respect to a display means comprising the steps of:
a) superimposing a box on a part of a visible portion of said document, the size and location of said box on said visible portion being representative of the size and location of said visible portion with respect to the whole of said document; and
b) interacting with said box to scroll said document within said window.

## Patentansprüche

1. Ein Hilfsmittel für ein Anzeigesystem mit einem Mittel zur Anzeige eines sichtbaren Bereiches eines Dokumentes, wobei das Hilfsmittel ein Mittel zur Überlagerung eines Teils des sichtbaren Bereiches mit einem Rahmen umfaßt, und wobei die Größe und Position des Rahmens in dem sichtbaren Bereich die Größe und Position des sichtbaren Bereiches im Verhältnis zum gesamten Dokument darstellt.

2. Ein Hilfsmittel gemäß Anspruch 1, wobei das Mittel ein Anzeigefenster auf einem Anzeigebildschirm ist.

3. Ein Hilfsmittel gemäß Anspruch 1 oder 2, wobei der Rahmen relativ zu dem Anzeigemittel dimensioniert wird, so daß es den Bereich des Dokumentes darstellt, der in dem Anzeigemittel sichtbar ist.

4. Ein Hilfsmittel gemäß Anspruch 3, wobei das Mittel zur Überlagerung mit einem Rahmen ein Dimensionierungsmittel umfaßt, mit dem die Größe des Anzeigemittels im Verhältnis zu der des Dokumentes ermittelt und eine Darstellung eines zweidimensionalen Bereiches mit einer bestimmten Größe erzeugt wird, die abhängig von den ermittelten Werten ist.

5. Ein Hilfsmittel gemäß Anspruch 4, wobei der durch das Dimensionierungsmittel erzeugte zweidimensionale Bereich mindestens eine vorgegebene Größe aufweist.

6. Ein Hilfsmittel gemäß Anspruch 5, wobei das Mittel zur Überlagerung mit einem Rahmen ein Mittel umfaßt, mit dem die Darstellung eines zweidimensionalen Bereiches mit dem sichtbaren Bereich des Dokumentes an einer Position des Anzeigemittels logisch kombiniert wird, die die Position des sichtbaren Bereiches relativ zum gesamten Dokument wiedergibt.

7. Ein Hilfsmittel gemäß Anspruch 6, wobei das Mittel zur logischen Kombination eine Antivalenzfunktion der Darstellung des zweidimensionalen Rahmens im Verhältnis zu dem sichtbaren Bereich des Dokumentes ist.

8. Ein Hilfsmittel gemäß einem der vorangegangen Ansprüche, das zusätzlich ein Mittel für die Interaktion mit dem Rahmen umfaßt, um ein Verschieben des Dokumentes in dem Fenster durchzuführen.

9. Ein Hilfsmittel gemäß Anspruch 8, wobei das Mittel für die Interaktion mit dem Rahmen ein benutzerbedienbares Mittel zur Cursorpositionierung, mit dem eine Bewegung des Cursors veranlaßt wird, einen benutzerbedienbaren Selektor für das dynamische Verschieben und Logik für das dynamische Verschieben umfaßt, die auf eine Aktivierung des Mittels zur Cursorpositionierung anspricht, welche die Bewegung des Cursors in eine gewählte Richtung anzeigt, wenn der Selektor für das dynamische Verschieben aktiviert wurde, um ein Verschieben des Dokumentes relativ zu dem Fenster in einer Richtung durchzuführen, die derjenigen, die durch die Aktivierung der Mittel zur Cursorpositionierung angezeigt wurde, entgegengesetzt ist.

10. Ein Hilfsmittel gemäß Anspruch 9, wobei das benutzerbedienbare Mittel zur Cursorpositionierung eine Maus und der Selektor für das dynamische Verschieben eine Maustaste ist.

11. Ein Hilfsmittel gemäß Anspruch 8 oder 9, wobei das Mittel für die Interaktion mit dem Rahmen einen benutzerbedienbaren Selektor für das vorgegebene Verschieben und Logik für das vorgegebene Verschieben umfaßt, mit der als Reaktion auf die Cursorposition relativ zu dem Rahmen zum Zeitpunkt der Betätigung des Selektors für das vorgegebene Verschieben ein Verschieben des Dokumentes um ein vorgegebenes Inkrement in eine wählbare Richtung durchgeführt wird.

12. Ein Hilfsmittel gemäß einem der Ansprüche 1 bis 5, wobei das Mittel für die Interaktion mit dem Rahmen ein benutzerbedienbares Mittel zur Cursorpositionierung, mit dem eine Bewegung des Cursors veranlaßt wird, einen benutzerbedienbaren Selektor für das vorgegebene Verschieben und Logik für das vorgegebene Verschieben umfaßt, mit der als Reaktion auf die Cursorposition relativ zu dem Rahmen zum Zeitpunkt der Betätigung des Selektors für das vorgegebene Verschieben ein Verschieben des Dokumentes um ein vorgegebenes Inkrement durchgeführt wird.

13. Ein Hilfsmittel gemäß Anspruch 11 oder 12, wobei das Verschieben in eine gewählte Richtung bei der Betätigung des Selektors für das vorgegebene Verschieben um ein erstes oder zweites vorgegebenes Inkrement erfolgt, je nachdem, ob sich der Cursor zum Zeitpunkt der Betätigung des Selektors für das vorgegebene Verschieben innerhalb oder außerhalb des Rahmens befindet.

14. Ein Hilfsmittel gemäß einem der Ansprüche 11, 12 oder 13, das ein Mittel für die logische Aufteilung des Anzeigemittels in eine Mehrzahl von Bereichen, die relativ zu dem Rahmen definiert sind, sowie für die Anzeige eines Cursors umfaßt, der in jedem der Bereiche die Richtung angibt, in die das Verschieben bei Betätigung des Selektors für das vorgegebene Verschieben durchgeführt wird.

15. Ein Hilfsmittel gemäß einem der Ansprüche 11, 12, 13 oder 14, wobei der benutzerbedienbare Selektor für das vorgegebene Verschieben eine Maustaste ist.

16. Ein Hilfsmittel gemäß einem der Ansprüche 8 bis 15, wobei das Mittel zur Überlagerung mit einem Rahmen die Position des Rahmens in dem Fenster in Übereinstimmung mit dem Verschieben des Dokumentes dynamisch ändert, und wobei der Rahmen den zu diesem Zeitpunkt sichtbaren Bereich des Dokumentes dynamisch anzeigt.

17. Ein Anzeigesystem, das eine Anzeige, ein Mittel zur Unterstützung von Fenstern für die Anzeige und ein Hilfsmittel gemäß einem der vorangegangenen Ansprüche enthält.

18. Ein Verfahren für ein Anzeigesystem mit einem Mittel zur Anzeige des sichtbaren Bereiches eines Dokumentes, das den sichtbaren Bereich darstellt, und das den Schritt der Überlagerung eines Teiles des sichtbaren Bereiches mit einem Rahmen umfaßt, wobei die Größe und Position des Rahmens in dem sichtbaren Bereich die Größe und Position des sichtbaren Bereiches im Verhältnis zum gesamten Dokument darstellt.

19. Ein Verfahren für das Verschieben eines Dokumentes im Verhältnis zu einem Anzeigemittel, das die folgenden Schritte umfaßt:
a) Überlagerung eines Teils eines sichtbaren Bereiches des Dokumentes mit einem Rahmen, wobei die Größe und Position des Rahmens in dem sichtbaren Bereich die Größe und Position des sichtbaren Bereiches im Verhältnis zum gesamten Dokument darstellt; und
b) Interaktion mit dem Rahmen, um ein Verschieben des Dokumentes in dem Fenster durchzuführen.

## Revendications

1. Outil pour un système d'affichage comportant un moyen pour présenter une partie visible d'un document, ledit outil comprenant un moyen pour superposer une zone sur une partie de ladite partie visible, la taille et l'emplacement de ladite zone sur ladite partie visible étant représentatifs de la taille et de l'emplacement de ladite partie visible par rapport à la totalité dudit document.

2. Outil selon la revendication 1, dans lequel ledit moyen d'affichage est une fenêtre d'affichage sur un écran de visualisation.

3. Outil selon la revendication 1 ou la revendication 2, dans lequel ladite zone est dimensionnée par rapport audit moyen d'affichage pour être représentative de ladite quantité dudit document visible à l'intérieur dudit moyen d'affichage.

4. Outil selon la revendication 3, dans lequel ledit moyen pour superposer une zone comprend un moyen de dimensionnement pour déterminer les tailles relatives dudit moyen d'affichage et dudit document et pour reproduire une représentation d'une surface bidimensionnelle d'une taille particulière fonction de ladite détermination.

5. Outil selon la revendication 4, dans lequel ladite surface bidimensionnelle produite par ledit moyen de dimensionnement comporte une dimension d'au moins une taille prédéterminée.

6. Outil selon la revendication 5, dans lequel ledit moyen pour superposer une zone comprend un moyen pour combiner logiquement ladite représentation d'une surface bidimensionnelle à ladite partie visible dudit document à un emplacement dans ledit moyen d'affichage représentatif de l'emplacement de ladite partie visible par rapport audit document total.

7. Outil selon la revendication 6, dans lequel ledit moyen pour la combinaison logique forme le OU exclusif de ladite représentation de ladite zone bidimensionnelle avec ladite partie visible dudit document.

8. Outil selon l'une quelconque des revendications précédentes comprenant de plus un moyen pour interagir avec ladite zone pour faire défiler ledit document à l'intérieur de ladite fenêtre.

9. Outil selon la revendication 8, dans lequel ledit moyen pour interagir avec ladite zone comprend un moyen de positionnement du curseur actionnable par l'utilisateur pour entraîner un déplacement du curseur, un sélecteur de défilement dynamique actionnable par l'utilisateur et une logique de défilement dynamique pour répondre à un actionnement dudit moyen de positionnement du curseur indiquant le déplacement dudit curseur dans une direction sélectionnée lorsque ledit sélecteur de défilement dynamique a été activé pour entraîner le défilement du document par rapport à ladite fenêtre dans une direction opposée à celle indiquée par ledit actionnement dudit moyen de positionnement du curseur.

10. Outil selon la revendication 9, dans lequel ledit moyen de positionnement du curseur actionnable par l'utilisateur est une souris et ledit sélecteur de défilement dynamique est un bouton de souris.

11. Outil selon la revendication 8 ou la revendication 9, dans lequel ledit moyen pour interagir avec ladite zone comprend un sélecteur de défilement préétabli actionnable par l'utilisateur et une logique de défilement préétablie pour entraîner le défilement du document d'une quantité préétablie dans une direction sélectionnable en réponse à la position du curseur par rapport à ladite zone sur actionnement dudit sélecteur de défilement préétabli.

12. Outil selon l'une quelconque des revendications 1 à 5, dans lequel ledit moyen pour interagir avec ladite zone comprend, un moyen de positionnement de curseur actionnable par l'utilisateur pour entraîner le déplacement d'un curseur, un sélecteur de défilement préétabli actionnable par l'utilisateur et une logique de défilement préétablie pour entraîner le défilement du document d'une quantité préétablie dans une direction sélectionnable en réponse à la position du curseur par rapport à ladite zone sur actionnement dudit sélecteur de défilement préétabli.

13. Outil selon la revendication 11 ou la revendication 12, dans lequel le défilement dans une direction sélectionnée sur actionnement dudit sélecteur de défilement préétabli est effectué par une première ou une seconde quantité préétablie fonction du fait que le curseur est à l'intérieur où l'extérieur de la zone sur actionnement dudit sélecteur de défilement préétabli.

14. Outil selon l'une quelconque des revendications 11, 12 ou 13 comprenant un moyen pour diviser logiquement le moyen d'affichage en une pluralité de régions définies par rapport à ladite zone et pour afficher un curseur qui indique, dans chacune desdites régions, la direction dans laquelle le défilement se produira sur actionnement dudit sélecteur de défilement préétabli.

15. Outil selon l'une quelconque des revendications 11, 12, 13 ou 14, dans lequel ledit sélecteur de défilement préétabli actionnable par l'utilisateur est un bouton de souris.

16. Outil selon l'une quelconque des revendications 8 à 15, dans lequel ledit moyen pour superposer une zone modifie dynamiquement la position de ladite zone à l'intérieur de la fenêtre en conformité avec le défilement dudit document d'où il résulte que la zone indique dynamiquement la partie du document actuellement visible.

17. Système d'affichage comprenant un affichage, un moyen pour supporter des fenêtres sur ledit affichage et un outil selon l'une quelconque des revendications précédentes.

18. Dans un système d'affichage comportant un moyen pour afficher une partie visible d'un document, un procédé pour représenter ladite partie visible comprenant l'étape consistant à superposer une zone sur une partie de ladite partie visible, la taille et l'emplacement de ladite zone sur ladite partie visible étant représentatifs de la taille et de l'emplacement de ladite partie visible par rapport à la totalité dudit document.

19. Procédé pour faire défiler un document par rapport à un moyen d'affichage comprenant les étapes consistant à :
a) superposer une zone sur une partie d'une partie visible dudit document, la taille et l'emplacement de ladite zone sur ladite partie visible étant représentatifs de la taille et de l'emplacement de ladite partie visible par rapport à la totalité dudit document, et
b) interagir avec ladite zone pour faire défiler ledit document à l'intérieur de ladite fenêtre.
